(19) Europäisches Patentamt
European Patent Office
Office européen des brevets

(11) Veröffentlichungsnummer: **0 061 683**
**B1**

(12) **EUROPÄISCHE PATENTSCHRIFT**

(45) Veröffentlichungstag der Patentschrift: **18.07.84**

(21) Anmeldenummer: **82102326.4**

(22) Anmeldetag: **20.03.82**

(51) Int. Cl.³: **C 09 J 3/16**, C 08 G 8/28, C 08 G 18/06, C 08 L 75/04, C 08 L 61/14

(54) **Härtbares Klebmittel.**

(30) Priorität: **01.04.81 DE 3113014**

(43) Veröffentlichungstag der Anmeldung: **06.10.82 Patentblatt 82/40**

(45) Bekanntmachung des Hinweises auf die Patenterteilung: **18.07.84 Patentblatt 84/29**

(84) Benannte Vertragsstaaten: **AT BE CH DE FR GB IT LI NL SE**

(56) Entgegenhaltungen:
**DE - A - 1 595 509**
**DE - A - 1 720 917**
**DE - A - 2 130 156**
**DE - B - 1 216 536**
**US - A - 3 510 439**

(73) Patentinhaber: **Th. Goldschmidt AG, Goldschmidtstrasse 100 Postfach 101461, D-4300 Essen 1 (DE)**

(72) Erfinder: **Fock, Jürgen, Dr., Mörsenbroicher Weg 114, D-4000 Düsseldorf 30 (DE)**
Erfinder: **Schedlitzki, Dietmar, Dr., Potthoffs Börde 18, D-4300 Essen (DE)**
Erfinder: **Holtschmidt, Ulrich, Dr., Veddershang 11, D-4300 Essen (DE)**
Erfinder: **Ahrens, Wilhelm, Dr., Prinzenstrasse 68, D-4300 Essen (DE)**

**EP 0 061 683 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein härtbares Klebmittel, welches als wirksame Bestandteile mindestens ein Polyol und ein Polyisocyanat und/oder dessen Präpolymeres sowie außerdem übliche Zusätze, wie Beschleuniger, Klebhilfsmittel, Pigmente und/oder Füllstoffe, enthält.

Härtbare Klebmittel auf Basis von Umsetzungsprodukten von Polyetherolen oder Polyesterolen mit Polyisocyanaten oder Polyisocyanatpräpolymeren sind bekannt und z. B. in dem Kunststoff-Handbuch, Band VII, »Polyurethane«, Vieweg-Höchtlen, Carl Hanser Verlag, München 1966, S. 719 ff., beschrieben. Ein Nachteil dieser Klebmittel besteht in ihrer schlechten Haftung auf Kunststoffoberflächen, wenn Polyetherole als Polyolkomponente eingesetzt werden.

Umsetzungsprodukte aus Polyesterolen und Polyisocyanaten bzw. deren Präpolymeren haften zwar besser auf Kunststoffoberflächen, man beobachtet jedoch eine Verschlechterung der Klebeigenschaften unter Einfluß von Feuchtigkeit oder Wasser.

Aus der US-PS 4 107 229 ist ein Beschichtungsmittel bekannt, welches dadurch erhalten wird, daß man zunächst einen Novolak mit Alkylenoxid, z. B. Propylenoxid, umsetzt und die erhaltenen Umsetzungsprodukte mit Hydroxyalkylmethacrylaten und Diisocyanaten in Styrol als Lösungsmittel umsetzt. Diese Beschichtungsmittel müssen perioxidisch gehärtet werden. Ein Nachteil dieser Beschichtungsmittel besteht in ihrem Gehalt an physiologisch bedenklichem Lösungsmittel sowie darin, daß die peroxidische Härtung sehr empfindlich durch Verunreinigungen auf dem zu verklebenden Substrat gestört und in vielen Fällen inhibiert wird.

Aus der DE-OS 2 440 580 sind ferner warmhärtende Harze bekannt, die dadurch erhalten werden, daß man zunächst einen Novolak mit Propylenoxid umsetzt und das Reaktionsprodukt mit Acrylsäure oder Methacrylsäure verestert. Auch dieses Harz muß in einem reaktiven Lösungsmittel, wie z. B. Styrol, gelöst und peroxidisch gehärtet werden.

Setzt man Novolake nur mit Isocyanaten um, so erhält man schlecht haftende und spröde Produkte.

Der Erfindung liegt nun die Aufgabe zugrunde, ein härtbares Klebmittel zu finden, welches mittels einer Additionsreaktion, also ohne peroxidische Härtung, abbindet und insbesondere auf Kunststoffoberflächen gut haftet, jedoch gegen Feuchtigkeit und Wasser unempfindlich ist.

Überraschenderweise sind diese Eigenschaften bei einem Klebmittel zu finden, welches erfindungsgemäß als Polyol das Umsetzungsprodukt eines Novolaks eines mittleren Molekulargewichtes von 300 bis 1200 mit einem Oxiran der allgemeinen Formel

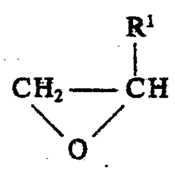

worin $R^1$ ein Wasserstoffrest oder eine, gegebenenfalls halogenierte, Kohlenwasserstoffgruppe mit 1 bis 4 Kohlenstoffatomen oder die Gruppe $-CH_2OR^2$, in der $R^2$ eine Alkyl- oder Alkenylgruppe bedeutet, und wobei innerhalb des polymeren Moleküls die Gruppe $R^1$ gleich oder verschieden ist, wobei im Mittel pro Hydroxylgruppe des Novolaks 1 bis 7 Mol des Oxirans angelagert worden sind, enthält und wobei das Polyol und das Polyisocyanat in einem solchen Verhältnis vorliegen, daß einer Hydroxylgruppe des Polyols 0,95 bis 1,25 Isocyanatgruppen des Polyisocyanats entsprechen.

Die Polyole werden durch Anlagerung von Oxiranen der vorgenannten Formel an einen Novolak in an sich bekannter Weise erhalten. Vorzugsweise verwendet man als Novolak ein Produkt, das durch Umsetzung von Formaldehyd mit Phenol und/oder Alkylphenolen mit 1 bis 4 Kohlenstoffatomen im Alkylrest erhalten worden ist. Besonders bevorzugt ist dabei als Alkylrest der Methylrest.

Das Molekulargewicht des Novolaks soll zwischen 300 und 1200 liegen. Bevorzugt ist der Molekulargewichtsbereich von 350 bis 800. Die Novolake können entsprechend dem Stand der Technik mit Hilfe einer Säure oder von Salzen zweiwertiger Metalle, insbesondere von Salzen des Zinks oder des Calciums, als Katalysator hergestellt werden. Je nach Art des Katalysators erhält man Novolake mit ortho- und para-Substituenten oder fast ausschließlich ortho-Substitution. Eine eingehende Erläuterung des Standes der Technik ist in den Monographien von A. Bachmann und K. Müller »Phenoplaste«, VEB Deutscher Verlag für Grundstoffindustrie, Leipzig, 1973, und von A. Knop und W. Scheib »Chemistry and Application of Phenolic Resins«, Springer-Verlag, Berlin, Heidelberg, New York, 1979, zu finden.

An diese Novolake können in an sich bekannter Weise Oxirane angelagert werden. Diese Oxirane entsprechen der vorgenannten Formel

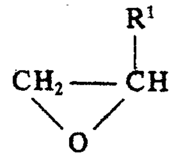

Die Gruppe $R^1$ kann ein Wasserstoffrest sein. Es handelt sich dann bei dem Oxiran um Ethylenoxid. Die Gruppe $R^1$ kann eine Alkylgruppe mit 1 bis 4 Kohlenstoffatomen sein. Bevorzugt ist $R^1$ eine Alkylgruppe mit 1 bis 4, insbesondere 1 bis 2, Kohlenstoffatomen. Ist $R^1$ eine Methylgruppe, handelt es sich um Propylenoxid. Die Alkylgruppe kann gegebenenfalls halogeniert sein und z. B. Chlorreste aufweisen. Beispiel einer solchen halogenierten Gruppe $R^1$ ist die $CH_2Cl$- und die $CH_2-CCl_3$-Gruppe. Die Alkylgruppe kann auch ungesättigt sein. Beispiel einer solchen ungesättigten Alkylgruppe ist die Vinyl- oder Allylgruppe.

Die Gruppe $R^1$ kann auch die Bedeutung der Gruppe $-CH_2-O-R^2$ haben, wobei $R^2$ eine Alkyl- oder Alkylengruppe ist. Beispiel einer geeigneten Alkylgruppe ist die Butylgruppe; Beispiel einer geeigneten Alkenylgruppe ist die Vinyl- oder Allylgruppe.

Als Oxirane können außer dem bereits genannten Ethylenoxid und Propylenoxid z. B. folgende Verbindungen verwendet werden: Butylenoxid; Isobutylenoxid; Epichlorhydrin; Epibromhydrin; Trifluormethylethylenoxid; 1,2-Dichlor-3,4-epoxybutan; 1,1-Dichlor-2,3-epoxybutan; 1,1,1-Trichlor-3,4-epoxybutan; Methylglycidylether; Ethylglycidylether; Isopropylglycidylether; tert.-Butylglycidylether; n-Hexylglycidylether; Ethylhexylglycidylether; Phenylglycidylether; Chlorphenylglycidylether; Nitrophenylglycidylether; Vinylglycidylether; Allylglycidylether; Butadienmonooxid.

Innerhalb des polymeren Moleküls kann die Bedeutung der Gruppe $R^1$ gleich oder verschieden sein.

Bevorzugt wird als Oxiran Propylenoxid verwendet.

Das Oxiran wird in solchen Mengen angelagert, daß pro Hydroxylgruppe des Novolaks 2 bis 4 Mol des Oxirans vorliegen. Als Anlagerungskatalysatoren werden die aus dem Stand der Technik bekannten Katalysatoren, insbesondere basische Katalysatoren, wie z. B. Natriummethylat, Natriumhydroxid, Kaliumhydroxid oder Calciumhydroxid, aber auch saure Katalysatoren, wie z. B. Bortrifluorid-etherat, verwendet.

Die so hergestellten Polyole entsprechen der folgenden vereinfachten durchschnittlichen Formel

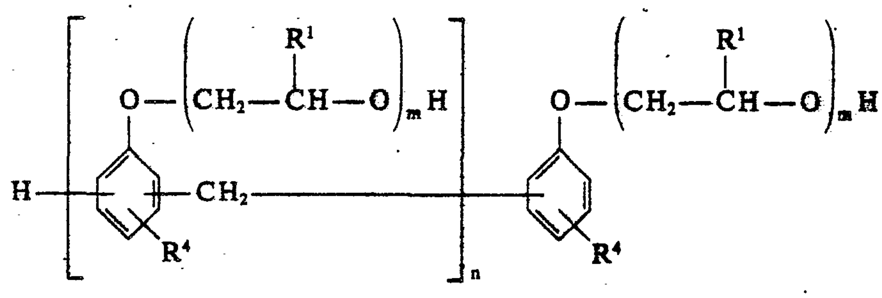

In dieser Formel hat $R^1$ die oben genannte Bedeutung. $R^4$ ist ein Wasserstoffrest oder ein Alkylrest mit 1 bis 4 Kohlenstoffatomen, insbesondere der Methylrest. Der Index m hat einen Wert von 1 bis 7, wobei sich dieser Wert auf das mittlere Molekül bezieht. Der Index n hat einen Wert von etwa 2 bis 10.

Bis zu 85 Gew.-% des durch Umsetzung eines Novolaks mit einem Oxiran erhaltenen Polyols können durch andere Polyhydroxyverbindungen ersetzt sein. Derartige Polyhydroxyverbindungen sind di- oder polyfunktionelle aliphatische Polyalkylenoxidderivate, wie sie z. B. durch Anlagerung von Oxiranen an aliphatische Alkohole mit mindestens zwei Hydroxylgruppen erhalten werden. Es können ferner die an sich bekannten Polyesterole sowie Rizinusöl verwendet werden. Man kann ferner niedermolekulare Polyacrylatpolymerisate oder -copolymerisate mit mindestens zwei Hydroxylgruppen verwenden. Durch diese Zusätze gelingt es, die Eigenschaften der Klebmittel in gewünschter Weise zu modifizieren und sie z. B. flexibler zu machen oder ihre Viskosität zu erniedrigen.

Als Polyisocyanate können allgemein die aus dem Stand der Technik bekannten Polyisocyanate verwendet werden. Vorzugsweise werden Polyisocyanate folgender Formel verwendet

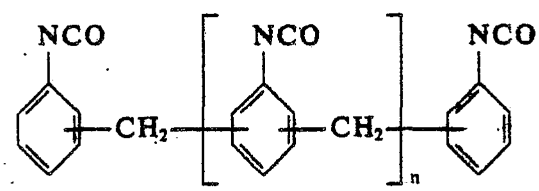

wobei $n \leqq 3$ ist,

oder

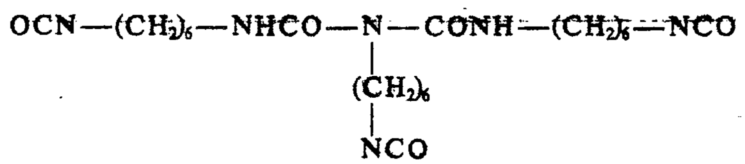

oder

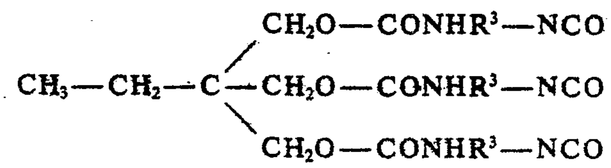

worin $R^3$ den Rest

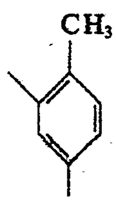

und/oder

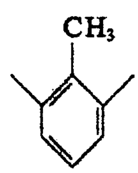

bedeutet.

Diese Isocyanate sind im Handel erhältlich. Jedoch sind auch andere Polyisocyanate, wie z. B. 1,6-Hexamethylendiisocyanate; 2,4,4-Trimethyl-1,6-hexamethylendiisocyanat; 3-Isocyanatomethyl-3,5,5-trimethylcyclohexylisocyanat; 1,4-Tetramethylendiisocyanat; 2,4- und 2,6-Hexahydrotoluylendiisocyanat; Hexahydro-1,3- bzw. -1,4-phenylendiisocyanat; 1,3- und 1,4-Phenylendiisocyanat; 2,4- und 2,6-Toluylendiisocyanat; 4,4'-Diisocyanato-diphenylmethan; Naphthylen-1,5-diisocynat; m-Xylylendiisocyanat; Tris-(4-isocyanatophenyl)-thiophosphat; 4,4',4''-Triisocyanatotriphenylmethan; 2,4,6-Triisocyanato-toluol oder 2,4,4'-Triisocyanato-diphenylether geeignet. Die Isocyanate müssen jedoch die Bedingung erfüllen, daß sie im Durchschnitt mindestens zwei Isocyanatgruppen pro Molekül aufweisen.

Als Präpolymere der Isocyanate können deren partielle Umsetzungsprodukte mit Polyether- oder Polyesterpolyolen eines Molekulargewichtes <2000 verwendet werden, wobei die Polyether- oder Polyesterpolyole im durchschnittlichen Molekül mindestens zwei Hydroxylgruppen aufweisen und wobei die Polyisocyanate mit diesen Polyolen in einem solchen Verhältnis umgesetzt werden, daß einer Hydroxylgruppe 1,5 bis 3 Isocyanatgruppen entsprechen.

Beispiele geeigneter Polyetherole sind lineare oder verzweigte Polyetherole auf Basis von Ethylenoxid, Propylenoxid und Butylenoxid, Polythioether und Addukte von Ethylenoxiden an Polyamine und alkoxylierte Phosphorsäuren.

Beispiele für geeignete Polyesterole sind lineare oder verzweigte Polyesterole, wie sie aus mehrwertigen, vorzugsweise zweiwertigen Carbonsäuren, wie Adipinsäure, Sebacinsäure, Phthalsäure, halogenierten Phthalsäuren, Maleinsäure, Benzol-1,2,4-tricarbonsäure, monomeren, dimeren oder trimeren Fettsäuren und mehrwertigen Alkoholen, wie z. B. Ethylenglykol, Polyethylenglykol, Propylenglykol, Polypropylenglykolen, Butandiol-1,3 und -1,4, 2,2-Dimethylpropandiol-1,3, Hexandiol-1,6, 1,1,1-Trimethylolpropan, Hexantriolen oder Glycerin auf üblichem Wege erhalten werden.

Die Umsetzung der Polyisocyanate mit den Polyether- oder Polyesterpolyolen erfolgt somit in einem solchen Verhältnis, daß im Umsetzungsprodukt je Molekül im Durchschnitt mindestens zwei Isocyanatgruppen vorliegen.

Die Aushärtungszeit bzw. Aushärtungstemperatur des Klebmittels kann in an sich bekannter Weise wesentlich durch Zusatz eines Beschleunigers verkürzt bzw. herabgesetzt werden. Besonders bevorzugt ist deshalb ein Klebmittel, welches als Beschleuniger bis zu 2 Gew.-%, bezogen auf die Summe der Polyole und Polyisocyanate, eines tertiären Amins und/oder einer zinnorganischen Verbindung enthält. Als tertiäre Amine sind besonders Dimethylbenzylamin, Dicyclohexylmethylamin, Dimethylpiperazin, Dimethylaminethanol, 1,2-Dimethylimidazol, N-Methyl- bzw. N-Ethyl-morpholin, Dimethylcyclohexylamin, 1-Aza-bicyclo-(3,3,0)-octan oder 1,4-Diaza-bicyclo-(2,2,2)-octan geeignet. Beispiele gut brauchbarer zinnorganischer Verbindungen sind Dibutylzinndilaurat oder Zinn(II)-octoat.

Als Hilfsstoffe kann man dem Klebmittel auch Pigmente und/oder Füllstoffe zusetzen. Hierfür sind sowohl anorganische als auch organische Produkte, wie z. B. Titandioxid, Eisenoxid, Chromoxid, Bariumsulfat, Quarzmehl, Talkum, Calciumcarbonat, Neuburger Kieselerde, Bentonit, geeignet.

Die erfindungsgemäßen Klebmittel härten bereits bei Raumtemperatur oder mäßig erhöhter Temperatur aus. Da die Klebmittel flüssig sind, ist die Verwendung eines Lösungsmittels nicht erforderlich. Ist es jedoch erwünscht, daß die Zubereitung sehr niedrigviskos ist, können inerte Lösungsmittel, wie z. B. niedere Ketone, Ether, Ester oder aromatische Lösungsmittel, verwendet werden.

Die guten klebtechnischen Eigenschaften der erfindungsgemäßen Klebmittel waren überraschend, da, wie oben ausgeführt, Umsetzungsprodukte von Novolaken mit Isocyanaten spröde sind, schlecht auf Kunststoffoberflächen haften und deshalb als Klebmittel nicht geeignet sind. Andererseits war,

wie oben ausgeführt, dem Fachmann bekannt, daß Umsetzungsprodukte aus Polyetherolen und Polyisocyanaten ebenfalls eine schlechte Haftung auf Kunststoffoberflächen zeigen. Es mußte deshalb überraschen, daß Umsetzungsprodukte von Novolaken und Oxiranen mit Polyisocyanaten Klebmittel ausgezeichneter Eigenschaften herzustellen gestatten. Dabei ist es jedoch von wesentlicher Bedeutung, daß Novolake eines Molgewichtsbereiches von 300 bis 1200 verwendet werden und im Mittel pro Hydroxylgruppe des Novolaks 1 bis 7 Mol Oxirane angelagert werden. Bei Unter- oder Überschreiten dieser Oxiranmenge verschlechtern sich die klebtechnischen Eigenschaften. Ein Maximum der klebtechnischen Eigenschaften besteht bei einem Anlagerungsgrad von 2 bis 4 Mol des Oxirans pro Hydroxylgruppe des Novolaks.

In den folgenden Beispielen werden die erfindungsgemäßen Klebmittel bezüglich ihrer Zusammensetzung und Eigenschaften noch näher erläutert. Alle Mengenangaben in den Beispielen beziehen sich auf Gewichtsteile.

Herstellung der Novolake

Zu 424 g Phenol wird bei 90°C eine Lösung aus 237 g 37%igem Formalin und 4,6 g Oxalsäure unter Rühren innerhalb einer Stunde zugetropft. Das Reaktionsgemisch wird weitere drei Stunden auf 90°C erwärmt. Nach dem Abkühlen wird die wäßrige Phase abgetrennt. Die organische Phase wird mehrfach mit Wasser gewaschen, um die Oxalsäure zu entfernen, danach im Vakuum bei 150°C eingeengt, bis das nicht umgesetzte Phenol weitgehend überdestilliert ist. Man erhält 351 g eines in fester Form anfallenden Novolakes, der eine Hydroxylzahl von 605 mg KOH/g und ein mittleres Molekulargewicht von 460, gemessen im Dampfdruckosmometer, aufweist. Der erhaltene Novolak wird mit N 1 bezeichnet.

Weitere Novolake werden entsprechend folgenden Ansätzen hergestellt:

| | Novolak N 2 | N 3 | N 4 |
|---|---|---|---|
| Phenol | 471 g | 424 g | 283 g |
| tert.-Butylphenol | — | — | 141 g |
| Formalin, 37%ig | 203 g | 292 g | 206 g |
| Oxalsäure | 4,9 g | 7,1 g | 4,7 g |

Die erhaltenen Novolake haben folgende Kenndaten:

| | Novolak N 2 | N 3 | N 4 |
|---|---|---|---|
| Hydroxylzahl | 620 | 610 | 540 |
| mittleres Molekulargewicht | 380 | 620 | 420 |

Herstellung der Polyole aus Novolaken und Oxiranen

74 g Novolak N 1 werden in 93 g Propylenoxid gelöst, mit 0,24 g Kaliummethylat versetzt und innerhalb einer Stunde im Autoklaven auf eine Temperatur von 140°C erhitzt. Die Temperatur wird so lange beibehalten, bis nahezu das gesamte Propylenoxid angelagert und der Druck im Reaktionsgefäß wieder abgefallen ist. Dies ist nach etwa sechs Stunden der Fall.

Nach dem Abkühlen zieht man geringe Mengen an nicht umgesetztem Propylenoxid im Vakuum bei 80°C ab, neutralisiert mit Phosphorsäure und trennt das entstandene Salz ab. Das getrocknete, in nahezu 100%iger Ausbeute anfallende Polyol hat eine Hydroxylzahl von 266 mg KOH/g und ein mittleres Molekulargewicht von 772, ermittelt durch gelchromatographische Analyse. Das Polyol enthält im Mittel 2 Mol Propylenoxid angelagert pro Mol Hydroxylgruppe des Novolaks N 1. Das Polyol ist bei Raumtemperatur hochviskos, aber noch fließfähig.

Auf ähnlichem Wege werden aus den Novolaken N 1 bis N 4 und Propylenoxid oder anderen

Oxiranen weitere Polyole hergestellt, die in Tabelle 1 aufgeführt sind. Dabei kann die Umsetzung der Novolake mit den Oxiranen auch in geeigneten, inerten Lösungsmitteln, wie z. B. Ethylenglykoldimethylether, durchgeführt werden. Im Falle halogenhaltiger Oxirane, wie Epichlorhydrin, empfiehlt sich die Anwendung von Bortrifluoridetherat anstelle von Kaliummethylat als Katalysator.

Herstellung der erfindungsgemäßen Klebmittel und Prüfung der Klebeigenschaften

a) Herstellung der Klebmittel aus Polyolen und Polyisocyanaten

Zur Herstellung der erfindungsgemäßen Klebmittel werden die Polyole mit verschiedenen Polyisocyanaten im angegebenen Mischungsverhältnis miteinander gemischt. Die Polyole werden in der Regel in lösungsmittelfreier Form angewendet. Falls niedrige Verarbeitungsviskositäten der Kleber gefordert werden, können inerte Lösungsmittel, wie Ester, Ketone oder Aromaten, als Verdünner eingesetzt werden.

Als Polyisocyanate werden vier handelsübliche Produkte verwendet: unter der Bezeichnung $b_1$ ein Polyphenyl-polymethylen-polyisocyanat (Roh-MDI) der allgemeinen Formel

$b_1$ 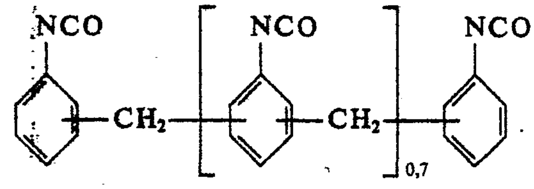

und unter der Bezeichnung $b_2$ ein Triisocyanat der Formel

$b_2$ 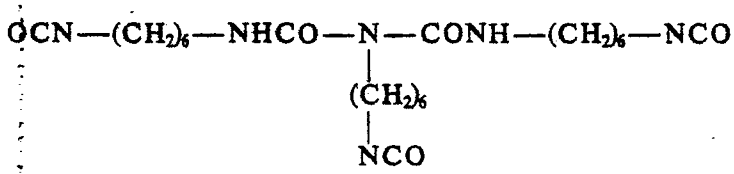

Beide Polyisocyanate werden in lösungsmittelfreier Form angewendet.

Unter der Bezeichnung $b_3$ wird ein Polyisocyanat der Formel

$b_3$ 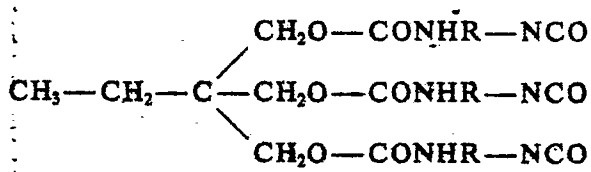

worin R den Rest

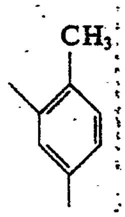 und/oder 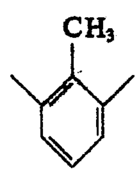

bedeutet,

eingesetzt, das als 75gew.-%ige Lösung in Ethylacetat vorliegt.

Des weiteren wird unter der Bezeichnung $b_4$ eine 60gew.-%ige Lösung in Methylethylketon eines Umsetzungsproduktes aus 3 Mol 2,4-Toluylendiisocyanat und 1 Mol eines trifunktionellen Polyesterols mit einem Molekulargewicht von 600, erhalten aus Adipinsäure, Ethylenglykol, 2,2-Dimethylpropandiol-1,3 und Trimethylolpropan, eingesetzt.

Der Gehalt an freien Isocyanatgruppen, bezogen auf Feststoff, beträgt:

| | |
|---|---|
| Polyisocyanat $b_1$ | 31,2 Gew.-% |
| Polyisocyanat $b_2$ | 22,7 Gew.-% |
| Polyisocyanat $b_3$ | 13,0 Gew.-% |
| Polyisocyanat $b_4$ | 11,2 Gew.-% |

Weitere Zusätze, wie Beschleuniger, Klebhilfsmittel, Pigmente und Füllstoffe, können gelöst bzw. dispergiert werden, wobei man zweckmäßigerweise diese Zusätze dem Polyol vor dem Abmischen mit dem Polyisocyanat zugibt.

Die genauen Rezepturen der Klebmittel sind der Tabelle 1 zu entnehmen. Die Rezepturen der Nrn. 1 bis 12 beschreiben die erfindungsgemäßen Klebmittel. Danach folgen unter den Rezepturen Nr. 13 bis Nr. 17 Vergleichsklebmittel.

Das Vergleichsklebmittel Nr. 13 enthält anstelle der erfindungsgemäßen Polyole ein difunktionelles Polyetherol auf Basis von Propylen- und Ethylenoxid mit einer Hydroxylzahl von 90 mg KOH/g.

Das Vergleichsklebmittel Nr. 14 enthält anstelle der erfindungsgemäßen Polyole ein Polyesterol mit einer Funktionalität von ca. 2,5 und einer Hydroxylzahl von 109 mg KOH/g. Der Polyester ist durch Kondensation von Adipinsäure mit Diethylenglykol, Ethylenglykol und Trimethylolpropan erhalten worden.

Die Rezepturen Nr. 15 und 16 enthalten Klebmittel der US-PS 4 107 229 bzw. der DE-OS 2 440 580. In beiden Fällen handelt es sich um peroxidisch gehärtete Klebmittel, die größere Mengen an Styrol als reaktives Lösungsmittel aufweisen. Das Vergleichsklebmittel Nr. 17 enthält als Polyolkomponente den Novolak N 1.

b) Prüfung der Klebeigenschaften

Zur anwendungstechnischen Prüfung der Klebmittel wird die Trommelschälfestigkeitsprüfung nach DIN 53 295 herangezogen. Die Trommelschälfestigkeit wird an zwei verschiedenen Verbunden ermittelt:

Verbund Aluminium/Polyethylen (PE)
Verbund Aluminium/Epoxidharz-Glasfaser-Laminat (GFK)

Die Aluminiumbleche bestehen aus der Qualität Al Cu Mg 2pl und werden vor dem Verkleben entfettet und einem Chromat-Schwefelsäure-Beizprozeß (Pickling-Beize) unterzogen. Das Polyethylen ist aufgerauht und vorbehandelt, und das Epoxidharz-Glasfaser-Laminat (GFK) ist angeschliffen.

Die Klebmittel werden in einer Menge von 60 g/m² Feststoff auf die Adhärenden aufgetragen und die Lösungsmittel, soweit vorhanden, bei Raumtemperatur oder erhöhter Temperatur, z. B. 70°C, abgedunstet. Die Aushärtung der Klebmittel wird bei 90°C während 20 Minuten unter einem Preßdruck von 0,5 N/mm² vorgenommen. Nach Abkühlung wird bei 20°C geschält.

Mit den Probekörpern aus Aluminium/GFK wird zusätzlich eine Heißwasserlagerung bei 95°C über drei Tage durchgeführt. Vor dem Schälversuch werden die Probekörper in Wasser von 20°C abgekühlt und noch feucht geschält. Diese Heißwasserlagerung ist als Kurzzeittest sehr gut geeignet, um die Beständigkeit der Klebmittel gegenüber Wasser und Feuchtigkeit zu prüfen.

Die erhaltenen Festigkeitswerte sind in der Tabelle 2 angeführt. Aus den Werten geht hervor, daß der Vergleichskleber Nr. 13, der ein Polyetherol enthält, geringe Festigkeiten liefert, weil er schlecht haftet. Der Vergleichskleber Nr. 14 auf Polyesterolbasis haftet zwar besser an Polyethylen und Glasfaser-Laminat, er fällt jedoch beim Heißwassertest in der Festigkeit ab. Die beiden Vergleichskleber Nr. 15 und Nr. 16, die peroxidisch härten, liefern ebenfalls geringe Festigkeiten; ebenso der Kleber Nr. 17, der den reinen Novolak N 1 als Polyolkomponente enthält.

In Fig. 1 ist die Abhängigkeit der Trommelschälfestigkeit des Verbundes Aluminium/Polyethylen von der Menge des an den Novolak N 1 angelagerten Propylenoxids wiedergegeben. Als Polyisocyanatkomponente wurde das Polyisocyanat $b_1$ eingesetzt. Man erkennt, daß hohe Festigkeiten nur in einem engen Bereich an angelagertem Propylenoxid erhalten werden.

Tabelle 1 — Klebmittelrezepturen

| Rezeptur Nr. | Polyol Novolak | angelagerte Molmenge Oxiran pro Mol OH Novolak | OH-Zahl Polyol | Gew.-Teile Polyol | Polyisocyanat Gew.-Teile | Molverhältnis OH : NCO | Sonstige Zusätze Gew.-Teile |
|---|---|---|---|---|---|---|---|
| | erfindungsgemäße Klebmittel | | | | | | |
| 1 | N 1 | 2,0 Propylenoxid | 266 | 100 | 70,2 $b_1$ | 1 : 1,1 | – |
| 2 | N 1 | 3,5 Propylenoxid | 185 | 100 | 53,3 $b_1$ | 1 : 1,2 | – |
| 3 | N 1 | 2,0 Propylenoxid | 266 | 100 | 92,2 $b_2$ | 1 : 1,05 | 0,02 Dibutylzinndilaurat |
| 4 | N 1 | 2,0 Propylenoxid | 266 | 100 | 160,9 $b_3$ | 1 : 1,05 | – |
| 5 | N 1 | 2,0 Propylenoxid | 266 | 100 | 177,9 $b_4$ | 1 : 1,0 | – |
| 6 | N 2 | 2,5 Propylenoxid | 233 | 85 | 67,1 $b_1$ | 1 : 1,1 | 15 Polyethylenglykol MG 300 |
| 7 | N 3 | 3,0 Propylenoxid | 203 | 100 | 53,6 $b_1$ | 1 : 1,1 | – |
| 8 | N 4 | 2,0 Propylenoxid | 260 | 100 | 65,5 $b_1$ | 1 : 1,05 | 20 Titandioxid |
| 9 | N 1 | 3,5 Epichlorhydrin | 141 | 100 | 37,2 $b_1$ | 1 : 1,1 | – |
| 10 | N 2 | 3,5 Epichlorhydrin | 143 | 100 | 37,7 $b_1$ | 1 : 1,1 | – |
| 11 | N 1 | 3,0 Ethylenoxid | 255 | 90 | 69,3 $b_1$ | 1 : 1,1 | 10 Polypropylenglykol MG 300 |
| 12 | N 1 | 2,0 Propylenoxid | 266 | 50 | 61,3 $b_1$ | 1 : 1,2 | 50 Rizinusöl + 100 Calciumcarbonat |
| | nicht erfindungsgemäße Vergleichsklebmittel | | | | | | |
| 13 | – | Polyetherol | 90 | 100 | 23,8 $b_1$ | 1 : 1,1 | – |
| 14 | – | Polyesterol | 109 | 100 | 28,8 $b_1$ | 1 : 1,1 | – |
| 15 | – | Klebmittel gemäß US-PS 4 107 229, Beispiel 1 u. 7 | – | – | – | – | – |
| 16 | – | Klebmittel, gemäß DE-OS 2 440 580, Beispiel 1 – 3 | – | – | – | – | – |
| 17 | – | Novolak N 1 | 605 | 100 | 159,7 $b_1$ | 1 : 1,1 | 80 Aceton |

Tabelle 2
Anwendungstechnische Prüfung der Klebmittel

| | Trommelschälfestigkeit DIN 53 295, Nmm/mm Al/PE | Al/GFK | Al/GFK nach 3 Tagen Heißwasserlagerung |
|---|---|---|---|
| Klebemittelrezeptur Nr. | | | |
| 1 | 318 | 73 | 65 |
| 2 | 313 | 76 | 67 |
| 3 | 255 | 65 | 60 |
| 4 | 241 | 62 | 58 |
| 5 | 243 | 59 | 55 |
| 6 | 276 | 75 | 68 |
| 7 | 265 | 71 | 63 |
| 8 | 265 | 70 | 62 |
| 9 | 281 | 72 | 62 |
| 10 | 272 | 68 | 60 |
| 11 | 290 | 70 | 61 |
| 12 | 320 | 65 | 62 |
| Vergleichsklebmittel | | | |
| 13 | 5 | 3 | 2 |
| 14 | 145 | 39 | 15 |
| 15 | 10 | 12 | 6 |
| 16 | 12 | 14 | 8 |
| 17 | 8 | 5 | 2 |

**Patentansprüche**

1. Härtbares Klebmittel, welches als wirksame Bestandteile mindestens ein Polyol und ein Polyisocyanat und/oder dessen Präpolymeres sowie außerdem übliche Zusätze, wie Beschleuniger, Klebhilfsmittel, Pigmente und/oder Füllstoffe, enthält, dadurch gekennzeichnet, daß es als Polyol das Umsetzungsprodukt eines Novolaks eines mittleren Molekulargewichts von 300 bis 1200 mit einem Oxiran der allgemeinen Formel

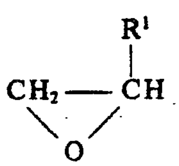

worin $R^1$ ein Wasserstoffrest oder eine, gegebenenfalls halogenierte, Kohlenwasserstoffgruppe mit 1 bis 4 Kohlenstoffatomen oder die Gruppe $-CH_2OR^2$, in der $R^2$ eine Alkyl- oder Alkenylgruppe bedeutet, und wobei innerhalb des polymeren Moleküls die Gruppe $R^1$ gleich oder verschieden ist,

wobei im Mittel pro Hydroxylgruppe des Novolaks 1 bis 7 Mol des Oxirans angelagert worden sind, enthält und wobei das Polyol und das Polyisocyanat in einem solchen Verhältnis vorliegen, daß einer Hydroxylgruppe des Polyols 0,95 bis 1,25 Isocyanatgruppen des Polyisocyanats entsprechen.

2. Klebmittel nach Anspruch 1, dadurch gekennzeichnet, daß der für die Umsetzung mit dem Oxiran eingesetzte Novolak durch Umsetzung von Formaldehyd mit Phenol und/oder Alkylphenolen mit 1 bis 4 Kohlenstoffatomen im Alkylrest mit einem Molverhältnis von Phenol zu Formaldehyd von 1 : 0,5 bis 1 : 0,95 erhalten worden ist.

3. Klebmittel nach Anspruch 1 oder 2, dadurch gekennzeichnet, daß der für die Umsetzung mit dem Oxiran eingesetzte Novolak ein Molekulargewicht von 350 bis 800 aufweist.

4. Klebmittel nach einem oder mehreren der vorhergehenden Ansprüche, dadurch gekennzeichnet, daß es als Polyol ein Umsetzungsprodukt eines Novolaks mit einem Oxiran enthält, wobei im Mittel pro Hydroxylgruppe des Novolaks 2 bis 4 Mol des Oxirans angelagert worden sind.

5. Klebmittel nach einem oder mehreren der vorhergehenden Ansprüche, dadurch gekennzeichnet, daß es als Polyol ein Umsetzungsprodukt eines Novolaks mit Propylenoxid enthält.

6. Klebmittel nach einem oder mehreren der vorhergehenden Ansprüche, dadurch gekennzeichnet, daß bis zu 85 Gew.-% des Polyols durch di- oder polyfunktionelle aliphatische Polyalkylenoxidderivate, Polyesterole, Rizinusöl oder niedermolekulare Polyacrylate mit mindestens zwei Hydroxylgruppen ersetzt sind.

7. Klebmittel nach einem oder mehreren der vorhergehenden Ansprüche, dadurch gekennzeichnet, daß es als Polyisocyanate Verbindungen der allgemeinen Formel

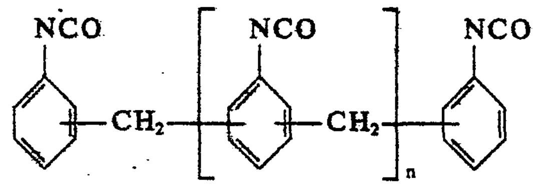

wobei $n \leqq 3$ ist,

oder

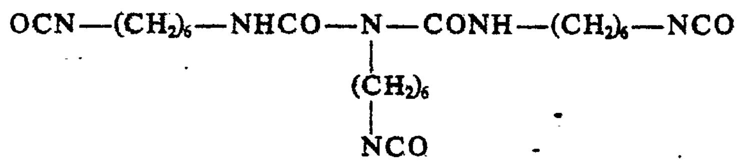

oder

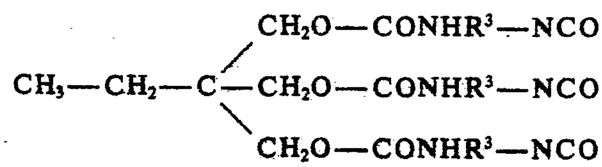

worin $R^3$ den Rest

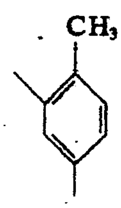

und/oder

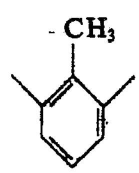

bedeutet,

enthält.

8. Klebmittel nach einem oder mehreren der vorhergehenden Ansprüche, dadurch gekennzeichnet, daß es als Polyisocyanate partielle Umsetzungsprodukte eines oder mehrerer Polyisocyanate mit Polyether- oder Polyesterpolyolen eines Molekulargewichtes $<2000$ enthält, wobei die Polyether- oder Polyesterpolyole im durchschnittlichen Molekül mindestens zwei Hydroxylgruppen aufweisen und wobei die Polyisocyanate mit diesen Polyolen in einem solchen Verhältnis umgesetzt werden, daß einer Hydroxylgruppe 1,5 bis 3 Isocyanatgruppen entsprechen.

9. Klebmittel nach einem oder mehreren der vorhergehenden Ansprüche, dadurch gekennzeichnet, daß es als Beschleuniger bis zu 2 Gew.-%, bezogen auf die Summe der Polyole und Polyisocyanate, eines tertiären Amins und/oder einer zinnorganischen Verbindung enthält.

**Claims**

1. Curable adhesive which contains, as active components, at least one polyol and one polyisocyanate and/or its prepolymer, as well as conventional additives,such as accelerators, adhesive auxilaries, pigments and/or fillers, characterised in that it contains, as the polyol, the reaction product of a novolak, having a mean molecular weight of 300 to 1200, with an oxirane of the general formula

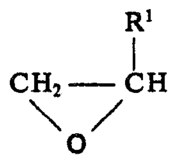

wherein $R^1$ denotes a hydrogen radical or an optionally halogenated hydrocarbon group having 1 to 4 carbon atoms, or the group $-CH_2OR^2$, in which $R^2$ denotes an alkyl or alkenyl group, within the polymeric molecule the group $R^1$ being identical or different, and on average 1 to 7 mol of the oxirane having undergone an addition reaction per hydroxyl group, and wherein the polyol and the polyisocyanate are present in a ratio such that 0.95 to 1.25 isocyanate groups of the polyisocyanate correspond to one hydroxyl group of the polyol.

2. Adhesive according to Claim 1, characterised in that the novolak employed for the reaction with the oxirane is obtained by reaction of formaldehyde with phenol and/or alkylphenols having 1 to 4 carbon atoms in the alkyl radical, using a molar ratio of phenol to formaldehyde of 1 : 0.5 to 1 : 0.95.

3. Adhesive according to Claim 1 or 2, characterised in that the novolak employed for the reaction with the oxirane has a molecular weight of 350 to 800.

4. Adhesive according to one or more of the preceding claims, characterised in that it contains, as the polyol, a reaction product of a novolak with an oxirane, on average 2 to 4 mol of the oxirane having undergone the addition reaction per hydroxyl group of the novolak.

5. Adhesive according to one or more of the preceding claims, characterised in that it contains, as the polyol, a reaction product of a novolak with propylene oxide.

6. Adhesive according to one or more of the preceding claims, characterised in that up to 85% by weight of the polyol is replaced with di- or polyfunctional aliphatic polyalkylene oxide derivatives, polyesterols, castor oil or low molecular weight polyacrylates containing at least two hydroxyl groups.

7. Adhesive according to one or more of the preceding claims, characterised in that it contains, as polyisocyanates, compounds of the general formula

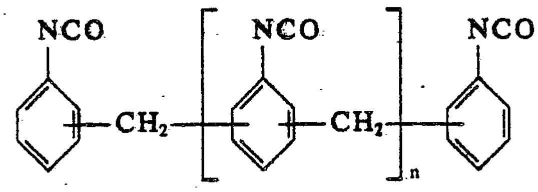

wherein $n \leq 3$,

or

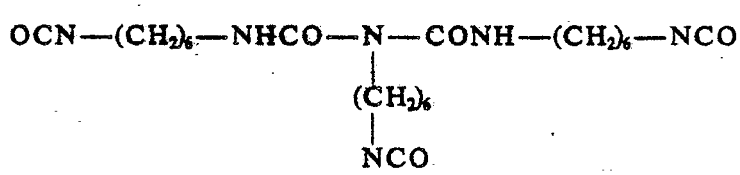

or

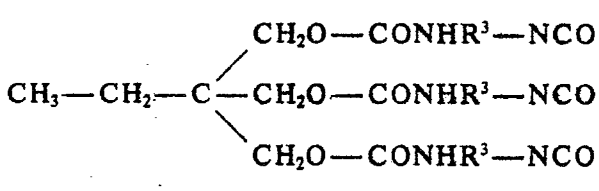

wherein $R^3$ denotes the radical

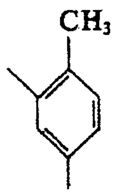

and/or

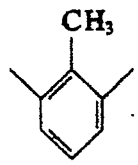

8. Adhesive according to one or more of the preceding claims, characterised in that it contains, as polyisocyanates, partial reaction products of one or more polyisocyanates with polyether- or polyester-polyols having a molecular weight <2000, the polyether- or polyesterpolyols having at least two hydroxyl groups in the average molecule, and the polyisocyanates being reacted with these polyols in a ratio such that 1.5 to 3 isocyanate groups correspond to one hydroxyl group.

9. Adhesive according to one or more of the preceding claims, characterised in that it contains, as an accelerator, up to 2% by weight, relative to the sum of the polyols and polyisocyanates, of a tertiary amine and/or an organotin compound.

**Revendications**

1. Adhésif durcissable qui contient comme constituants actifs au moins un polyol et un polyisocyanate et/ou prépolymère de celui-ci, et en outre des additifs usuels tels que des accélérateurs, des adjuvants de collage, des pigments et/ou des charges, caractérisé par le fait qu'il contient comme polyol le produit de réaction d'une novolaque d'un poids moléculaire moyen de 300 à 1200 sur un oxiranne de formule générale

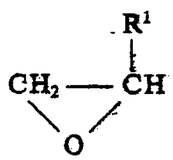

dans laquelle $R^1$ représente un atome d'hydrogène ou un groupe hydrocarbure éventuellement halogéné de 1 à 4 atomes de carbone ou le groupe $-CH_2OR^2$ dans lequel $R^2$ représente un groupe alkyle ou alcényle, le groupe $R^1$ pouvant être semblable ou différent au sein de la molécule polymère, 1 à 7 moles d'oxiranne étant fixées par addition, en moyenne, par groupe hydroxyle de la novolaque, le polyol et le polyisocyanate étant présents en un rapport tel qu'à un groupe hydroxyle du polyol corresponde 0,95 à 1,25 groupe isocyanate du polyisocyanate.

2. Adhésif selon la revendication 1, caractérisé par le fait que la novolaque utilisée pour la réaction sur l'oxiranne a été obtenue par réaction du formaldéhyde sur le phénol et/ou des alkylphénols contenant 1 à 4 atomes de carbone dans le radical alkyle, avec un rapport molaire phénol/formaldéhyde compris entre 1 : 0,5 et 1 : 0,95.

3. Adhésif selon l'une des revendications 1 et 2, caractérisé par le fait que la novolaque utilisée pour la réaction sur l'oxiranne présente un poids moléculaire de 350 à 800.

4. Adhésif selon une ou plusieurs des revendications précédentes, caractérisé par le fait qu'il contient comme polyol un produit de réaction d'une novolaque sur un oxiranne, 2 à 4 moles d'oxiranne ayant été fixées par addition, en moyenne, par groupe hydroxyle de la novolaque.

5. Adhésif selon une ou plusieurs des revendications précédentes caractérisé par le fait qu'il contient comme polyol un produit de réaction d'une novolaque sur l'oxyde de propylène.

6. Adhésif selon l'une ou plusieurs des revendications précédentes, caractérisé par le fait que jusqu'à 85% en poids du polyol sont remplacés par des dérivés aliphatiques difonctionnels ou polyfonctionnels de polyoxyalkylène, des polyesterols, de l'huile de ricin ou des polyacrylates à bas poids moléculaires contenant au moins deux groupes hydroxyle.

7. Adhésif selon l'une ou plusieurs des revendications précédentes, caractérisé par le fait qu'il contient comme polyisocyanates des composés de la formule suivante:

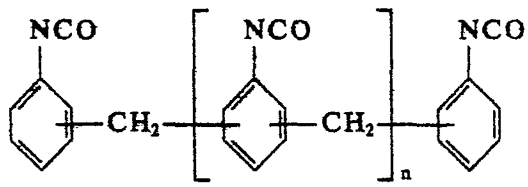

dans laquelle n ≤ 3,

ou

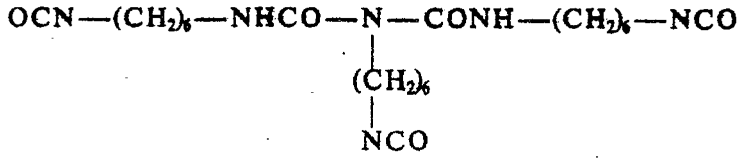

ou

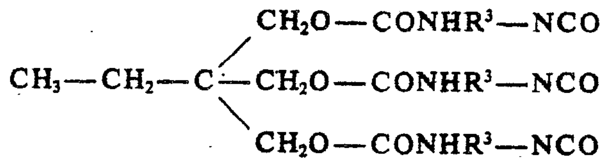

dans laquelle $R^3$ représente le radical

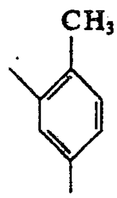

et/ou

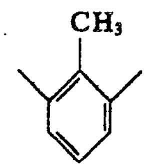

8. Adhésif selon l'une ou plusieurs des revendications précédentes, caractérisé par le fait qu'il contient comme polyisocyanates des produits de réaction partielle d'un ou plusieurs polyisocyanates sur des polyéther- ou polyesterpolyols d'un poids moléculaire inférieur à 2000, les polyéther- ou polyesterpolyols présentant dans la molécule moyenne au moins 2 groupes hydroxyle et les polyisocyanates étant mis à réagir avec ces polyols en un rapport tel qu'à un groupe hydroxyle correspondent 1,5 à 3 groupes isocyanate.

9. Adhésif selon l'une ou plusieurs des revendications précédentes, caractérisé par le fait qu'il contient comme accélérateur jusqu'à 2% en poids, relativement au total des polyols et des polyisocyanates, d'une amine tertiaire et/ou d'un composé organoétain.

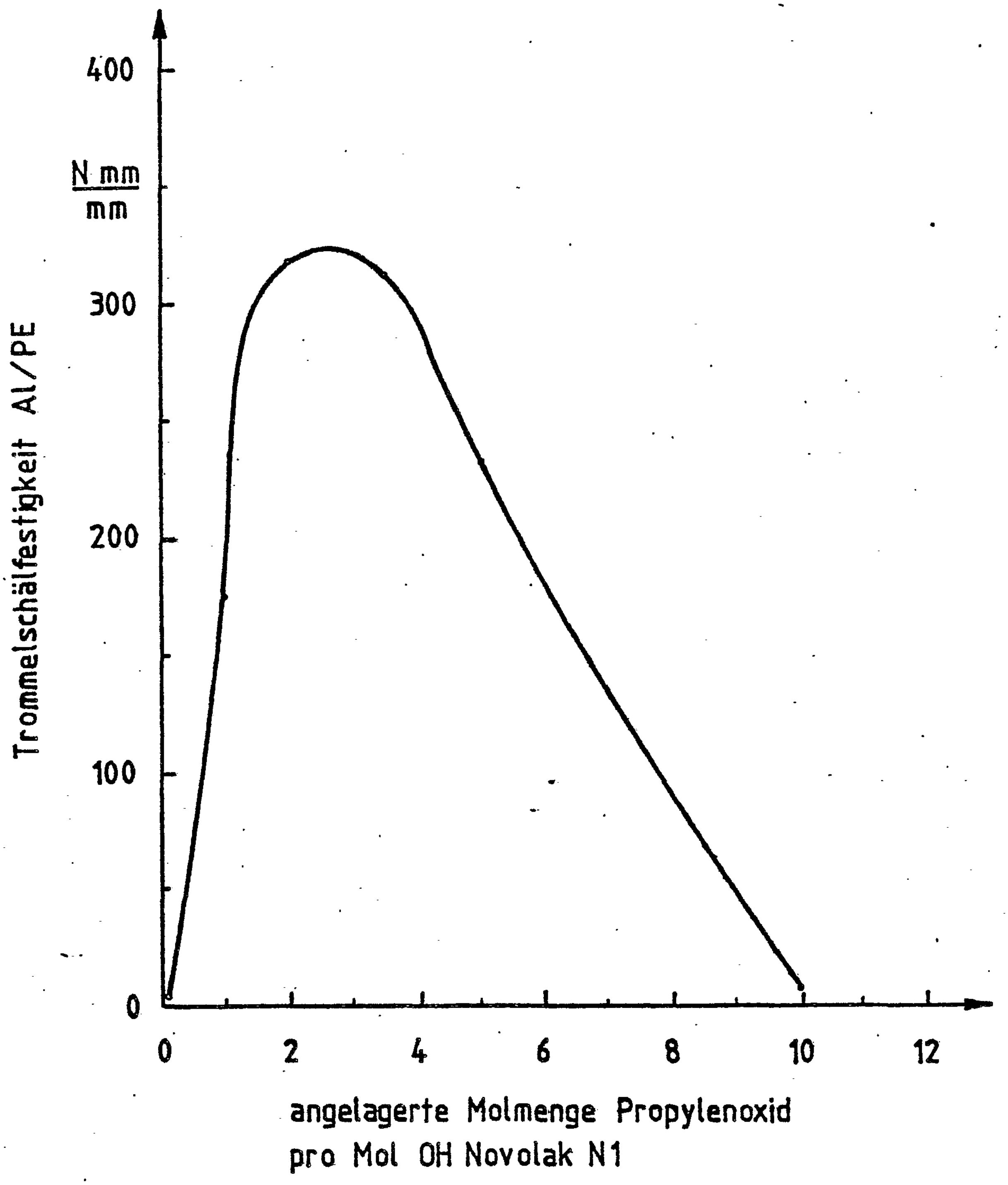
400
300
200
100
0
N mm
mm
Trommelschälfestigkeit Al/PE
0
2
4
6
8
10
12
angelagerte Molmenge Propylenoxid
pro Mol OH Novolak N1

Fig. 1